# EUROPÄISCHE PATENTSCHRIFT

(11) **EP 0 513 052 B1**
(45) Veröffentlichungstag und Bekanntmachung des Hinweises auf die Patenterteilung: **13.04.1994**
(21) Anmeldenummer: 91902666.6
(22) Anmeldetag: 31.01.1991
(51) Int. Cl.: H02N 1/00

(54) **DIELEKTRISCHER MOTOR**
DIELECTRIC MOTOR
MOTEUR DIELECTRIQUE

(30) Priorität: 02.02.1990 DE 4003115
(43) Veröffentlichungstag der Anmeldung: 19.11.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: BENECKE, Wolfgang, D-1000 Berlin 30 (DE); WAGNER, Bernd, D-1000 Berlin 38 (DE); GIMSA, Jan, D-1000 Berlin 1058 (DE); FUHR, Günter, D-1000 Berlin 1113 (DE); HAGEDORN, Rolf, D-1000 Berlin 1094 (DE); GLASER, Roland, D-1000 Berlin 1020 (DE)
(74) Vertreter: Münich, Wilhelm, Dr.
(86) Internationale Anmeldenummer: DE9100089
(87) Internationale Veröffentlichungsnummer: WO9111848

(56) Entgegenhaltungen:
- ELEKTRIE. vol. 43, no. 2, 1989, BERLIN DD Seiten 45 - 50; G. FUHR; R. HAGEDORN: "DIELEKTRISCHE MOTOREN"
- SENSOR AND ACTUATORS. vol. 20, no. 1/2, 15 November 1989, LAUSANNE CH Seiten 25 - 32; W.C. TANG; TU-CUONG: "LATERALLY DRIVEN POLYSILICON RESONANT MICROSTRUCTURES"
- ELECTRONIC DESIGN. vol. 38, no. 2, 25 Januar 1990, HASBROUCK HEIGHTS, N Seite 26 M. LEONARD: "ELECTRIC MOTORS ON A CHIP ADVANCE FROM ACADEMIA'S LABS"
- INTERNATIONAL ELECTRON DEVICES MEETING; San Francisco, CA 11-14 dec. 1988 21 April 1989, Seiten 666 - 669; L. SHENG FAN; YU-CHONG TAI: "IC-PROCESSED ELECTROSTATIC MICRO-MOTORS"
- PATENT ABSTRACTS OF JAPAN vol. 13, no. 348 (E-799)(3696) 4 August 1989, & JP-A-1 107667 (SANYO) 25 April 1989,

## Beschreibung

### Technisches Gebiet

Die Erfindung bezieht sich auf einen dielektrischen Motor, der mittels elektrischer Felder angetrieben wird, mit Rotoren, die von mehreren Elektroden umgeben sind.

Solche Motoren eignen sich zur Miniaturisierung und können mit mikroelektronischen Elementen kombiniert werden (Systemintegration). Sie können als Antriebe miniaturisierter Maschinen oder Pumpen, als Schaltelemente oder zur Lagebestimmung eingesetzt werden. So kann ein schrittweiser Betrieb zur Freigabe oder Sperrung optischer Kanäle zur Informationsübertragung dienen. Eine Lagebestimmung kann dadurch erreicht werden, daß der Rotor nur dann rotiert, wenn das entsprechende Bauelement eine bestimmte Lage einnimmt. Ein weiteres Anwendungsgebiet ist der Einsatz in mikrochirurgischen Instrumenten.

### Stand der Technik

Kontinuierlich laufende Motoren, die über konstante elektrische Felder angetrieben werden, sind in der Fachliteratur in ihrer Wirkungsweise beschrieben und in ihrem Rotationsverhalten berechnet worden (z.B. Secker, P. E.; Scialom, I. N.: A Simple Liquid Immersed dielectric Motor, Journal of Applied Physics, 39, 1968, S. 2957 bis 2961). Bei diesen Motoren liegt die Anfangsdrehrichtung nicht fest, so daß für den Start zusätzliche Hilfseinrichtungen erforderlich sind.

In der japanischen Offenlegungsschrift JP-A-1 107 667 ist ein Motor angegeben, bei welchem zwei zylindrische Rotoren unter dem elektrostatischen Einfluß von Elektroden, die an der Innenwand eines Hohlzylinders angebracht sind, zur Rotation um getrennte Drehachsen angeregt werden.

Miniaturisierte dielektrische Motoren mit unterschiedlichem Aufbau sind in GEO 10, 1988, Seite 188 und in der amerikanischen Patentschrift US-PS 4 740 410 beschrieben worden. Bei diesen Motoren werden rotierende elektrische Felder eingesetzt, so daß Startvorrichtungen entfallen. In der europäischen Patentschrift EP-A-0 233 947 ist ein dielektrischer Motor angegeben, dessen Rotor sektorartige, radial angeordnete Dielektrika aufweist. Bei diesen beschriebenen Motoren beruht die Anregung auf elektrostatischer Wirkung. Auch alternierende Felder werden stets unter quasi stationären Bedingungen angelegt. Deshalb drehen sich die Rotoren dieser Motoren stets in Richtung des rotierenden Feldes, es handelt sich demnach um Synchronmotoren. Das Einsatzgebiet solcher Motoren ist durch diese Eigenschaft begrenzt.

Mit der Veröffentlichung "Dielektrische Motoren" in ELEKTRIE 43, 1989, 2, Seite 45 bis 50, ist ein dielektrischer Motor bekanntgeworden, der mehrere feststehende, um einen zentralen Bereich angeordnete Elektroden aufweist. In dem zentralen Bereich sind zwei Rotoren aus dielektrischem Material drehbar angeordnet, die mittels elektrischer Felder angetrieben werden. Die Anregung erfolgt über ein gemeinsames Anregungsfeld. Die Flexibilität der Rotationszustände dieses Motors ist dadurch eingeschränkt, daß die Bewegung der Rotoren synchron erfolgt.

### Darstellung der Erfindung

Der Erfindung liegt die Aufgabe zugrunde, einen dielektrischen Motor mit beeinflußbarer Rotationskennlinie anzugeben, der über eine Vielzahl einfach zu regelnder Rotationszustände verfügt.

Diese Aufgabe wird bei einem gattungsgemäßen dielektrischen Motor durch die kennzeichnenden Merkmale des Anspruchs 1 gelöst.

Durch die gemeinsame Anordnung der Rotoren in dem von den Elektroden begrenzten, zentralen Bereich werden die Rotoren über ein gemeinsames Anregungsfeld angetrieben. Durch die Anzahl und die Anordnung der Rotoren im zentralen Bereich ergeben sich verschiedene Rotationszustände, die für entsprechende Anwendungen eingesetzt werden können.

Da die Rotoren aus unterschiedlichen dielektrischen Materialien bestehen, werden die verschiedenen Rotoren von dem gemeinsamen Anregungsfeld unterschiedlich angetrieben. Die Rotoren können dabei mit gleichem oder mit entgegengesetztem Drehsinn rotieren und gleiche oder unterschiedliche Winkelgeschwindigkeiten aufweisen.

Vorteilhafte Ausgestaltungen und Weiterbildungen der Erfindung sind in den Unteransprüchen gekennzeichnet.

Bei der Ausgestaltung des erfindungsgemäßen Motors nach Anspruch 3 ist wenigstens ein Rotor nicht rotations-symmetrisch aufgebaut. Dies kann dadurch erreicht werden, daß dieser Rotor Bereiche aus unterschiedlichen dielektrischen Materialien aufweist, die bezüglich der Rotationsachse nicht rotationssymmetrisch angeordnet sind. Der Rotor kann aber auch eine geometrische Form aufweisen, die bezüglich der Rotationsachse nicht symmetrisch ist. Durch den rotations-unsymmetrischen Aufbau weist bereits der einzelne Rotor verschiedene Rotationszustände auf. In Kombination mit den weiteren Rotoren wird dadurch die Anzahl der Gesamtzustände weiter erhöht.

Nach Anspruch 3 nimmt wenigstens ein Rotor eine feste Lage im zentralen Bereich des Motors ein. Die Position der räumlich nicht fixierten Rotoren hängt vom Anregungsfeld, der Position der übrigen Rotoren, dem Umgebungsmedium und von der Lage des dielektrischen Motors ab. Durch die Bestimmung der Rotationszustände kann deshalb z. B. auf die Lage des Motors geschlossen werden. Die Rotoren können bei dieser Ausgestaltung teilweise, ständig oder überhaupt nicht in direktem mechanischen Kontakt zueinander oder zu den Elektroden stehen.

Die verfügbaren Zustände können auch dadurch beeinflußt werden, daß gemäß Anspruch 4 leitfähige Bereich in die Rotoren eingebaut werden oder nach Anspruch 5 elektrisch polarisierbare Körper im zentralen Bereich des Motors angebracht werden. Diese Maßnahmen beeinflussen die Rotationscharakteristik der einzelnen Rotoren. So können die verschiedenen Rotoren zum gleichen Zeitpunkt kontinuierlich, diskontinuierlich oder schrittweise betrieben werden.

Eine besonders vorteilhafte Weiterbildung der Erfindung ist im Anspruch 6 gekennzeichnet. Die Rotoren sind als Zahnwalzen ausgebildet. Werden zwei nebeneinanderliegende Zahnwalzen in gegensinnige Rotation versetzt, beschleunigen die Zähne der Walzen ein Umgebungsmedium in eine Vorzugsrichtung. Diese Weiterbildung der Erfindung eignet sich deshalb als Pumpe für flüssige oder gasförmige Medien. Dabei ist es vorteilhaft, wenn wenigstens einer der Rotoren gemäß Anspruch 7 deformierbar ist. Bei dieser Ausgestaltung wird vermieden, daß ein im Pumpmedium befindlicher fester Körper zur Zerstörung eng benachbarter Rotoren führt.

Nach Anspruch 8 rotieren die antreibenden elektrischen Felder stark asynchron zur Rotationsbewegung der Rotoren. Dabei können Rotor- und Felddrehsinn gleich oder gegeneinander gerichtet sein. Das elektrische Feld kann mit einer bis zu 10⁷ mal höheren Geschwindigkeit umlaufen als die Rotoren.

Die mit der Erfindung erzielten Wirkungen werden dadurch verstärkt, daß die elektrischen Felder gemäß Anspruch 9 mit einer pro Umlauf wechselnden Amplitude rotieren. Die Rotation der elektrischen Felder kann nach Anspruch 10 diskontinuierlich, beispielsweise durch Anlegen von phasenverschobenen Rechteckspannungen an die Elektroden erfolgen. Dadurch kann ein diskontinuierlicher Lauf einer oder aller Rotoren erzwungen werden.

Der erfindungsgemäße Motor kann besonders stark miniaturisiert werden. Nach den Ansprüchen 11 bis 13 wird der Motor mit Hilfe der Fertigungsmethoden der Mikromechanik aus einem Substrat hergestellt. Damit können Motoren mit einer Ausdehnung von weniger als 100 µm gefertigt werden.

Als Substrat wird beispielsweise Silizium, eventuell versehen mit dünnen Isolationsschichten wie SiO₂, Si₃N₄ oder Glas verwendet. Die Elektroden werden mit photolithographischen Methoden strukturiert und galvanisch, z. B. mit Gold abgeformt. Damit kann die Elektrodengeometrie mit Mikrometergenauigkeit definiert werden. Unter Verwendung der Tiefenlithographie können Elektrodenhöhen von mehreren 100 Mikrometern erreicht werden.

Die Rotoren werden ebenfalls mit mikromechanischen Verfahren aus dielektrischen Materialien gefertigt. Aus den aufgebrachten Schichten können Rotoren mit einer Höhe im Mikrometerbereich hergestellt werden. Höhere Rotoren können aus Photolack mit Tiefenlithographie gefertigt werden.

Mit isotropen oder anisotropen und selektiven Ätzverfahren werden im Substrat präzise Gruben und Kanäle geäzt, die zur Fixierung des Rotores oder zum Heran- und Wegleiten der Umgebungslösung des Motors dienen. Mit dem gleichen Verfahren kann auch eine mit dem Substrat verbundene Rotorachse hergestellt werden. Eine Kapselung des Systems kann mit einem zweiten Wafer, der auf dem Substratwafer aufgebondet wird, erreicht werden. Die Verwendung von Silizium als Substratmaterial bietet die besondere Möglichkeit, elektrische Schaltkreise zur Ansteuerung und Regelung des Motors gemeinsam mit den mechanischen Elementen auf einem gemeinsamen Substrat zu integrieren.

Die Vorteile der Erfindung bestehen insbesondere darin, daß viele Rotationezustände darstellbar sind, die sich für unterschiedliche Zwecke einsetzen lassen. Der Motor kann als Schaltelement oder variabler Antrieb dienen. Es können Mikrodosiereinrichtungen, Pumpen und Ventile aufgebaut werden, die in der Technik, der Pharmakologie, Chemie und Biotechnologie einsetzbar sind. Die starke Miniaturisierung führt dazu, daß die Anlaufzeit des Motors im Mikrosekundenbereich liegt.

### Kurze Beschreibung der Zeichnungen

Drei Ausführungsbeispiele der Erfindung sind in den Zeichnungen dargestellt und werden nachfolgend näher beschrieben. Es zeigen:
- Fig. 1: einen dielektrischen Motor mit vier Elektroden und zwei dielektrischen Rotoren in Draufsicht und Seitenansicht,
- Fig. 2: einen dielektrischen Motor mit einem großen und acht kleinen Rotoren in Draufsicht,
- Fig. 3: einen dielektrischen Motor mit zwei Rotoren in Draufsicht,
- Fig. 4: die Winkelgeschwindigkeit zweier Rotoren in Abhängigkeit von der Frequenz des anregenden elektrischen Drehfelds.

### Wege zur Ausführung der Erfindung

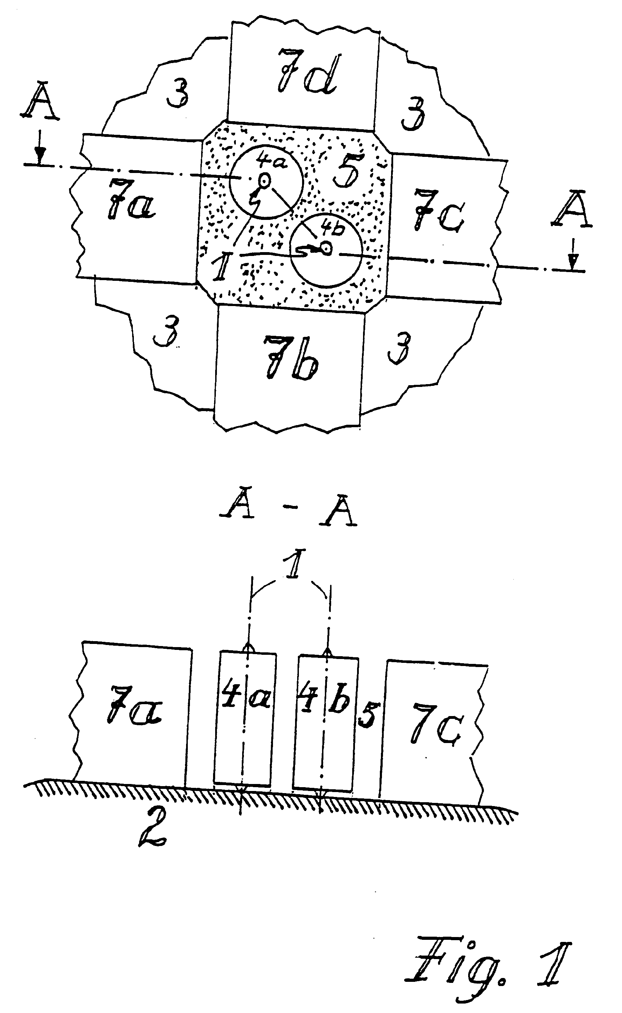

In Figur 1 ist ein dielektrischer Motor dargestellt, der mittels elektrischer Felder angetrieben wird. Vier Elektroden 7a bis 7d sind um einen zentralen Bereich angebracht. In dem zentralen Bereich sind die Rotoren 4a,4b drehbar angeordnet. Die Drehachsen 1 sind räumlich voneinander getrennt. Die Lagerung der Rotoren 4 erfolgt in bekannter Weise auf einem Substrat 2. Die Rotoren 4 im zentralen Bereich sind von einem schwach leitfähigen Umgebungsmedium 5, z. B. Wasser oder Alkohol umgeben. Das Umgebungsmedium 5 kann auch ein Gas sein. Die Elektroden 7a bis 7c sind durch isolierende Bereiche 3 voneinander isoliert.

Legt man an die Elektroden 7a bis 7d jeweils 90°-phasenverschobene Sinusspannungen an oder einen von Elektrode zu Elektrode springenden elektrischen Feldvektor, so drehen sich die Rotoren 4a und 4b in Abhangigkeit von der Kreisfrequenz des Feldes und dessen Amplitude. Kollektive Rotationszustände treten umso stärker in Erscheinung, je geringer der Abstand der Rotoren ist. Werden dielektrisch asymmetrische oder von der rotationssymmetrischen oder sphärischen bzw. zylindrischen Form abweichende Rotoren verwendet, oder auch nur ein Rotor in dieser Art ausgeführt, so kann, je nach Ansteuerart der Elektroden 7, ein kontinuierlicher oder diskontinuierlicher Lauf eines oder beider Rotoren erzwungen werden.

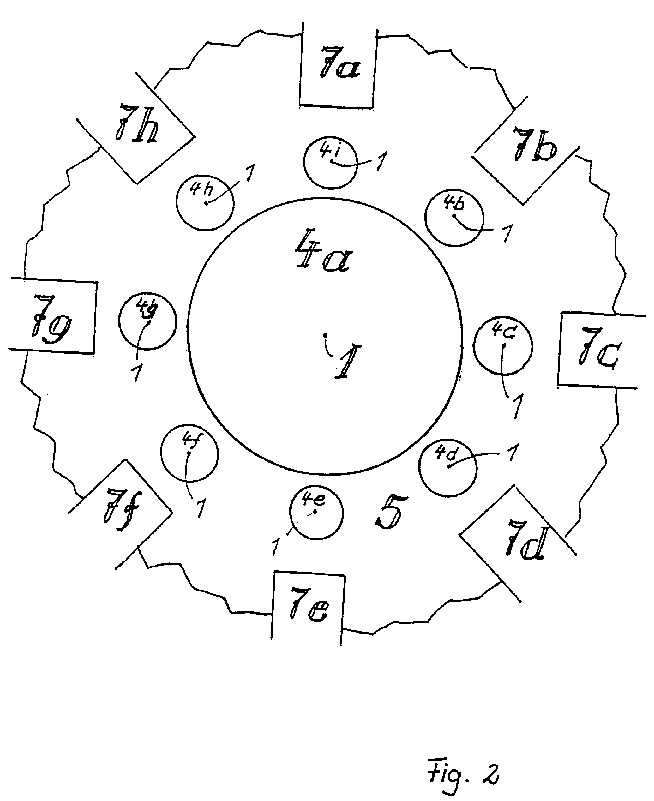

Der Motor in Figur 2 besteht aus acht Elektroden 7a bis 7h, einem großen dielektrischen Rotor 4a, der zentral angeordnet ist und acht kleinen dielektrischen Rotoren 4b bis 4i, die jeweils zwischen den Elektroden 7a bis 7h und dem großen Rotor 4a angeordnet sind. Die Rotoren 4 befinden sich in dem Umgebungsmedium 5 (Wasser, Alkohol oder Gemische von beiden). Die Rotoren 4 sind in fixierter Position angeordnet und können um die Rotationsachsen 1 rotieren. Die Lagerung und der prinzipielle Aufbau des Motors gleicht dem in Beispiel 1. Die Rotoren 4 bilden ein Ensemble und die kollektive wechselseitige elektrische Beeinflussung charakterisiert die Rotation der Einzelrotoren. Aufgrund seiner Größe dominiert Rotor 4a. Die Wahl der Rotordielektrika und der Aufbau (dielektrisch homogen, sektorartig, schalenförmig oder in Richtung der Rotationsachse 1 schichtweise aufgebaut) gestattet es, das Rotationsverhalten einzelner Rotoren zu verändern und das Verhalten des Rotorensembles zu beinflussen. Es ist möglich, Rotoren auch gegenläufig bei gleichem Bewegungsfeld laufen zu lassen. Mit Hilfe dieser unterschiedlichen oder gruppenweise gleichen Rotationen können eine Vielzahl von Rotationszuständen erzeugt werden, die für Schalt-, Antriebszwecke oder beispielsweise miniaturisierte Sensoren benutzt werden können. Kontinuierliche Rotation wird über ein kontinuierlich rotierendes elektrisches Feld (8 mal 45°-phasenverschobenen Sinusspannung) erzeugt. Je mehr Rotoren in den Elektrodenraum eingefügt werden, umso stärker treten Kollektiveffekte des Rotorensembles in Erscheinung.

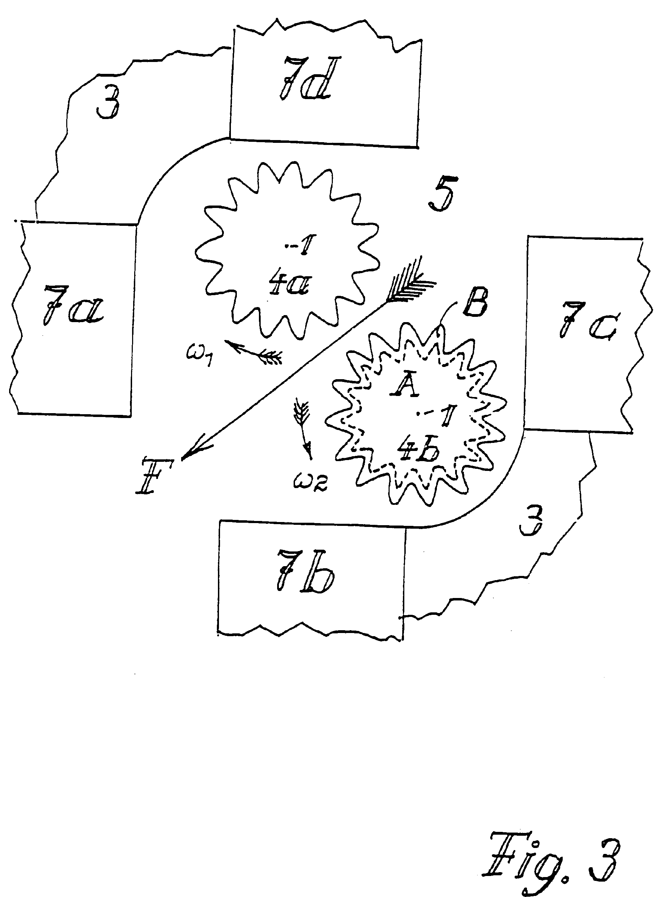

Der Motor in Figur 3 besteht aus vier Elektroden 7a bis 7d und zwei dielektrischen Rotoren 4a, 4b die sich in fixierter Position um die Achse 1 drehen können, wobei einer der Rotoren 4b aus einem inneren Dielektrikum A und einer Schale B besteht. Beide Rotoren sind dielektrisch so aufgebaut, daß sie bei einer bestimmten Kreisfrequenz des externen Drehfeldes, das über die Elektroden 7 erzeugt wird, eine gegenläufige Bewegung ausführen. Die gegenläufige Bewegung ist durch die gebogenen Pfeile und die zugehörigen Winkelgeschwindigkeiten w₁ und w₂ angedeutet. Durch die gegenläufige Bewegung wird die Umgebungslösung 5 (eine Flüssigkeit oder ein Gas) in eine Vorzugsrichtung beschleunigt. Wie durch den Pfeil F angedeutet, erfolgt der Transport von der Seite mit den Elektroden 7c, 7d zu der Seite mit den Elektroden 7a, 7b wenn die übrigen Seiten des Rotorraums durch die elektrisch isolierenden Bereiche 3 abgeschlossen sind. Durch Umschalten der Felddrehrichtung oder durch Veränderung der Kreisfrequenz der Feldes läßt sich die Pumprichtung umkehren. Mit Hilfe dieser Anordnung lassen sich extrem kleine Mikrodosiereinrichtungen und Pumpen oder Ventile aufbauen.

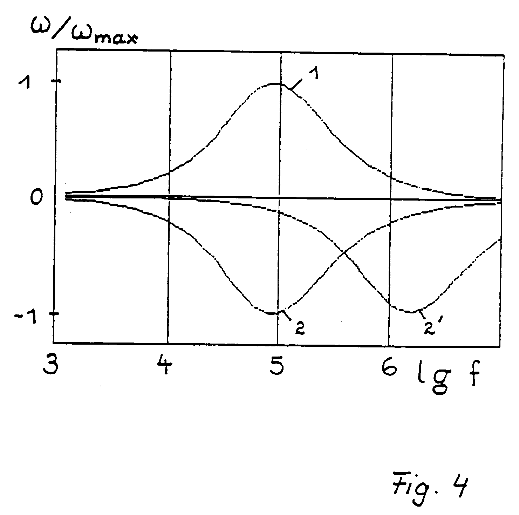

In Figur 4 sind die Winkelgeschwindigkeiten der beiden in Figur 3 gezeigten Rotoren in Abhängigkeit von der Frequenz des umlaufenden elektrischen Feldes dargestellt. In vertikaler Richtung ist die Winkelgeschwindigkeit normiert auf die maximale Winkelgeschwindigkeit aufgetragen, in horizontaler Richtung die Frequenz des anregenden Feldes in logarithmische Maßstab. Die Kurve 1 bezieht sich auf den Rotor 4a, die Kurve 2 auf den Rotor 4b. Bei einer Frequenz von etwa 10⁵ Hz erreichen die Rotoren die größten gegenläufigen Winkelgeschwindigkeiten. Bei dieser Frequenz ist die Pumpwirkung des als Pumpe betriebenen Motors am größten.

Durch Wahl der Dielektrika der Rotoren und der Leitfähigkeit der Um-gebungslösung kann bei festgelegtem Felddrehsinn die Lage der maximalen Winkelgeschwindigkeit bezüglich der Feldfrequenz variiert werden, was durch die verschobene Kurve 2' angedeutet ist. Die Pumpwirkung wird neben dem elektrischen Feld auch durch die passiven elektrischen Eigenschaften der Rotoren und der Pumpflüssigkeit beeinflußt. Darüberhinaus beeinflussen sich die Rotoren über ihr induziertes Dipolfeld gegenseitig. Sie sind nicht nur hydromechanisch sondern auch berührungslos elektrisch gekop-pelt, woraus sich ein komplexes Systemverhalten ergibt, daß den jeweiligen Anwendungszweck angepaßt werden kann.

## Patentansprüche

1. Dielektrischer Motor, der mittels elektrischer Felder angetrieben wird, mit mehreren feststehenden Elektroden (7), die um einen zentralen Bereich angebracht sind, wodurch in dem zentralen Bereich wenigstens zwei Rotoren (4) aus dielektrischem Material drehbar angeordnet sind, dadurch **gekennzeichnet**, daß die Rotoren (4) aus unterschiedlichen dielektrischen Materialien bestehen und räumlich voneinander getrennte Drehachsen (1) aufweisen.

2. Dielektrischer Motor nach Anspruch 1
dadurch **gekennzeichnet,** daß wenigstens ein Rotor (4) bezüglich seiner Rotationsachse (1) rotations-unsymmetrisch aufgebaut ist.

3. Dielektrischer Motor nach einem der Ansprüche 1 oder 2,
dadurch **gekennzeichnet,** daß die Rotationsachse (1) wenigstens eines Rotors (4a) räumlich festgelegt ist und die Rotationsachse (1) wenigstens eines anderen Rotors (4b) im zentralen Bereich verschiebbar ist.

4. Dielektrischer Motor nach einem der Ansprüche 1 bis 3,
dadurch **gekennzeichnet,** daß wenigstens ein Rotor (4) leitfähige Bereiche enthält.

5. Dielektrischer Motor nach einem der Ansprüche 1 bis 4,
dadurch **gekennzeichnet**, daß im zentralen Bereich elektrisch polarisierbare Körper angebracht sind.

6. Dielektrischer Motor nach einem der Ansprüche 1 bis 5,
dadurch **gekennzeichnet**, daß die Rotoren (4) als Zahnwalzen ausgebildet sind.

7. Dielektrischer Motor nach einem der Ansprüche 1 bis 6,
dadurch **gekennzeichnet**, daß wenigstens ein Rotor (4) deformierbar ist.

8. Dielektrischer Motor nach einem der Ansprüche 1 bis 7,
dadurch **gekennzeichnet**, daß die Rotation des antreibenden elektrischen Feldes stark asynchron zur Rotation der Rotoren (4) erfolgt.

9. Dielektrischer Motor nach einem der Ansprüche 1 bis 8,
dadurch gekennzeichnet, daß die zum Antrieb vorgesehenen elektrischen Felder mit pro Feldumlauf wechselnder Amplitude rotieren.

10. Dielektrischer Motor nach einem der Ansprüch 1 bis 9,
dadurch **gekennzeichnet,** daß der Antrieb über diskontinuierlich rotierende elektrische Felder erfolgt.

11. Dielektrischer Motor nach einem der Ansprüche 1 bis 10,
dadurch **gekennzeichnet**, daß als Dielektrika SiO₂, Si₃N₄, TiO₂ oder Glas Verwendung finden und daß die Elektroden mit photolithographischen Methoden strukturiert und galvanisch abgeformt sind.

12. Dielektrischer Motor nach einem der Ansprüche 1 bis 11,
dadurch **gekennzeichnet,** daß die mechanischen Elemente mit einem elektrischen Schaltkreis zur Ansteuerung und Regelung des Motors auf einem gemeinsamen Substrat integriert sind.

13. Dielektrischer Motor nach einem der Ansprüche 1 bis 12,
dadurch **gekennzeichnet**, daß als Substrat ein Halbleitereinkristall verwendet wird.

## Claims

1. Dielectric motor driven by means of electric fields, comprising several stationary electrodes (7) disposed around a central region, so that at least two rotors (4) of a dielectric material are disposed for rotation in said central region,
**characterized** in that said rotors (4) are made of different dielectric materials and present axes of rotation (1) which are spatially separated from each other.

2. Dielectric motor according to Claim 1,
**characterized in** that at least one rotor (4) presents an axially non-symmetrical structure in relation to its axis of rotation (1).

3. Dielectric motor according to any of Claims 1 or 2,
**characterized in** that the axis of rotation (1) of at least one rotor (4a) is spatially fixed and that the axis of rotation (1) of at least one other rotor (4b) is adapted to be shifted in said central region.

4. Dielectric motor according to any of Claims 1 to 3,
**characterized in** that at least one rotor (4) includes conductive regions.

5. Dielectric motor according to any of Claims 1 to 4,
**characterized in** that electrically polarizable bodies are mounted in said central region.

6. Dielectric motor according to any of Claims 1 to 5,
**charactrized in** said rotors (4) are configured as serrated rollers.

7. Dielectric motor according to any of Claims 1 to 6,
**characterized in** that at least one rotor (4) is deformable.

8. Dielectric motor according to any of Claims 1 to 7,
**characterized in** that the rotation of the driving electric field is strongly asynchronous relative to the rotation of said rotors (4).

9. Dielectric motor according to any of Claims 1 to 8,
**characterized in** that the electric fields provided for driving rotate with an amplitude varying per field rotation.

10. Dielectric motor according to any of Claims 1 to 9,
**characterized in** that the driving motion is provided through discontinuously rotating electric fields.

11. Dielectric motor according to any of Claims 1 to 10,
**characterized in** that SiO₂, Si₃N₄, TiO₂ or glass are used as dielectric, and that said electrodes are structured by means of photolithographic methods and are galvanically formed.

12. Dielectric motor according to any of Claims 1 to 11,
**characterized in** that the mechanical elements are integrated with an electric circuit for controlling and regulating the motor on a common substrate.

13. Dielectric motor according to any of Claims 1 to 12,
**characterized in** that a semiconductor mono-crystal is used as said substrate.

## Revendications

1. Moteur diélectrique entraîné moyennant des champs électriques, qui comprend plusieurs électrodes fixes (7) qui sont disposées autour d'une zone centrale, au moins deux rotors (4) en matériau diélectrique étant ainsi disposé pour tourner dans ladite zone centrale,
**caractérisé** en ce que lesdits rotors (4) sont composés des matériaux diélectriques différents et présentent des axes de rotation (1) séparés l'un de l'autre en espace.

2. Moteur diélectrique selon la revendication 1,
**caractérisé** en ce qu'au moins un rotor (4) est structuré à asymétrie de révolution relativement à son axe de rotation (1).

3. Moteur diélectrique selon une quelconque des revendications 1 ou 2,
**caractérisé** en ce que ledit axe de rotation (1) d'au moins un rotor (4a) est fixé en espace et que l'axe de rotation (1) d'au moins un autre rotor (4b) est décalable dans ladite zone centrale.

4. Moteur diélectrique selon une quelconque des revendications 1 à 3,
**caractérisé** en ce qu'au moins un rotor (4) comprend des zones conductrices.

5. Moteur diélectrique selon une quelconque des revendications 1 à 4,
**caractérisé** en ce que des corps électriquement polarisables sont montés dans ladite zone centrale.

6. Moteur diélectrique selon une quelconque des revendications 1 à 4,
**caractérisé** en ce que lesdits rotors (4) sont configurés sous forme de rouleaux à cannelure.

7. Moteur diélectrique selon une quelconque des revendications 1 à 6,
**caractérisé** en ce qu'au moins un rotor (4) est déformable.

8. Moteur diélectrique selon une quelconque des revendications 1 à 7,
**caractérisé** en ce que la rotation du champ électrique est fortement asynchrone relativement à la rotation des rotors (4).

9. Moteur diélectrique selon une quelconque des revendications 1 à 8,
**caractérisé** en ce que les champs électriques prévus pour l'entraînement tournent à une amplitude qui se change par révolution du champ.

10. Moteur diélectrique selon une quelconque des revendications 1 à 9,
**caractérisé** en ce que l'entraînement se fait moyennant des champs électriques rotatifs en discontinu.

11. Moteur diélectrique selon une quelconque des revendications 1 à 10,
**caractérisé** en ce que le SiO₂, Si₃N₄, TiO₂ ou du verre sont utilisés comme le diélectrique, et en ce que lesdites électrodes sont structurées au moyen des processus de photolithographie et sont formées par galvanisation.

12. Moteur diélectrique selon une quelconque des revendications 1 à 11,
**caractérisé** en ce que les éléments mécaniques, ensemble avec un circuit électrique pour commander et régler le moteur, sont intégrés sur un substrat commun.

13. Moteur diélectrique selon une quelconque des revendications 1 à 12,
**caractérisé** en ce qu'un semi-conducteur à mono-cristal est utilisé comme le substrat.
